# EUROPEAN PATENT APPLICATION

(11) **EP 0 601 712 A1**
(43) Date of publication of application: **15.06.1994**
(21) Application number: 93308922.9
(22) Date of filing: 09.11.1993
(51) Int. Cl.: G01C 21/20

(54) **Navigation system**

(30) Priority: 12.11.1992 JP 301945/92
(71) Applicant: PIONEER ELECTRONIC CORPORATION, Meguro-ku Tokyo-to (JP)
(72) Inventor: Kuwahara, Shingo, Pioneer Elect. Corp., Oaza-Yamada, Kawagoe-shi, Saitama-ken (JP); Odagawa, Satoshi, Pioneer Elect. Corp., Oaza-Yamada, Kawagoe-shi, Saitama-ken (JP)
(74) Representative: Brunner, Michael John

(57) **Abstract**

The navigation system matches the vehicle's position, determined either by dead reckoning (Pslf) or by using GPS (Pgps), to the nearest road (RD) in its map database. If the smallest perpendicular distance (L) to any road in the database is larger than a predetermined value (Lref), or if it is not but the angle (ϑ) subtended by the vehicle's position is larger than a predetermined value (ϑref), then the navigation system assumes that the vehicle is moving on a road which is not in the database. It then omits the step of matching the position to the roads in the database, and displays the dead-reckoned position (Pslf) or the GPS position (Pgps).

## Description

The present invention generally relates to navigation systems for movable bodies, and more particularly to a display unit used in an on-vehicle navigation system.

There is a self-sustaining navigation system, which is a position measuring device for use in movable bodies, such as automobiles, airplanes and ships. Such a self-sustaining navigation system obtains a two-dimensional displacement (vector quantity) of the movable body by using azimuth data from an azimuth sensor and speed data from a speed sensor, and adds the two-dimensional displacement to a reference point. In this manner, the current position of the movable body can be identified. For example, the navigation system installed in an automobile operates as follows. Generally, a predetermined number of pulses are generated when a drive shaft makes one revolution. The distance between the reference point and the current position is calculated by obtaining the total number of pulses generated during the time the automobile moves the above distance. The distance is multiplied by a distance correction coefficient in order to obtain a travel distance. The direction from a geomagnetic sensor is used to obtain a travel direction.

There is a GPS (Global Positioning System) type navigation system as a position measuring device using satellites. The GPS type navigation system generally receives electric waves emitted from three GPS satellites or more, and identifies the position of the receiving point by referring to pseudo-distance data including a time offset of a receiver based on the distance between each GPS satellite and the receiving point, and position data indicating each GPS satellite.

As navigation devices employing these position measuring devices, there are various data displaying devices such as a simple system for displaying latitude and longitude of the current position expressed in numerals, a complex system for displaying various data including a self-position, a distance between the current position and the destination and a traveling speed etc. on a CRT (Cathode Ray Tube).

The process for displaying various data items on the CRT of the navigation system includes steps of reading out map data having the identified current position from a recording medium such as a CD-ROM, carrying out a map matching by using the map data read out from the recording medium and the data of the identified current position and displaying the self-current position, the traveling direction etc. on the map displayed on the CRT. Therefore, the user can recognize the self-current position on the map by looking at the screen of the CRT.

Here, the map matching will be explained as follows.

The digitized map data includes direction information and distance information which are recorded as a slope and a length of a line segment. The map matching is a method for estimating the accurate current position by using the direction and distance information. By carrying out the map matching, when it is judged that the current position should exist on the traveling road on which the self-vehicle has been traveling, the current position is moved on the traveling road, even if the detected direction is slightly deviated from the correct direction due to an error of the sensor, for example. Therefore, the current position is smoothly displayed.

In the case of the conventional navigation system, the map displayed on the CRT screen is produced on the basis of road data of main roads and the like by using map data offered by Japanese National Geographic Institute (KOKUDOTIRIIN), for example.

A great number of roads are actually not displayed on the map. Therefore, if a vehicle is traveling on a road which is not shown in the map, the map matching is carried out on the basis of the road data and the accuracy in displaying the current position is declined.

Accordingly, an object of the present invention is to provide a navigation system capable of displaying the current position without declining the accuracy in displaying the current position, if the vehicle is traveling on the road which is not shown in the map.

According to the present invention, the above mentioned object can be achieved by a navigation system, including measuring device for measuring a current position and outputting first current position data; storing device for storing map data; map matching device for carrying out map matching on the basis of the first current position data and the map data, and outputting second current position data; displaying device having a screen for displaying various information; and current position displaying device for displaying the current position on a map displayed on the screen of the displaying device on the basis of the second current position data, in which the map is produced from the map data, wherein the navigation system further includes: detecting device for detecting whether or not the current position is actually existing on a road corresponding to road data included in the map data; and switching device for displaying current positions obtained from the first current position data instead of those obtained from the second current position data at least during a predetermined interval, if the detecting device detects that the current position is actually not existing on the road.

According to the present invention, the detecting device detects whether or not the current position is actually existing on a road corresponding to road data included in the map data. The switching device displays the current positions obtained from the first current position data instead of those obtained from the second current position data at least during a predetermined interval, if the detecting device detects that the current position is actually not existing on the road.

Thus, the current position can be accurately displayed, even if the vehicle is traveling on the road which does not have the road data included in the navigation system.

The nature, utility, and further features of this invention will be more clearly apparent from the following detailed description with respect to preferred embodiments of the invention when read in conjunction with the accompanying drawings briefly described below.

In the drawings:-
FIG. 1 is a schematic block diagram of an embodiment of the present invention;
FIG. 2 is a flowchart of an embodiment of the present invention;
FIG. 3 is a first operational diagram showing the operation of an embodiment;
FIG. 4 is a second operational diagram showing the operation of an embodiment.

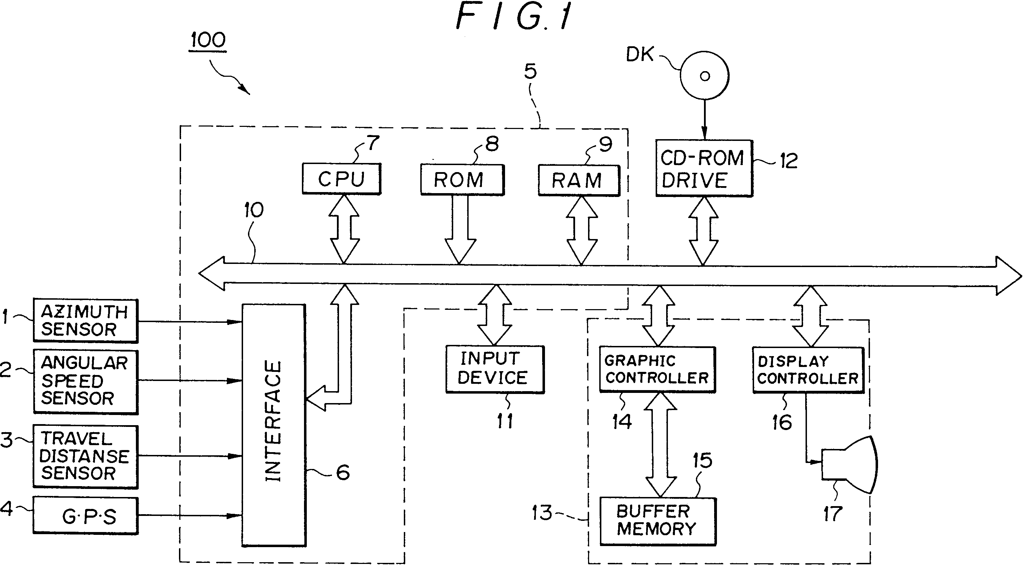

FIG. 1 is a block diagram of a basic structure in which the present invention is applied to an on-vehicle navigation system.

An on-vehicle navigation system 100 shown in FIG. 1 includes an azimuth sensor 1, an angular speed sensor 2, a travel distance sensor 3, a GPS receiver 4, a system controller 5, an input device 11, a CD-ROM drive 12 and a display unit 13. The azimuth sensor 1 generates azimuth data indicating the direction in which the vehicle is traveling. The angular speed sensor 2 detects an angular speed when the vehicle turns. The travel distance sensor 3 detects the number of revolutions of a shaft and integrates it to thereby generate travel distance data. The GPS receiver 4 receives an electric wave from a GPS satellite, and generates GPS measurement position data therefrom. The system controller 5 controls the whole navigation system on the basis of the azimuth data, the angular speed data, the travel distance data and the GPS position measurement data. The input device 11 is used for inputting various data pieces to the navigation system 100. The CD-ROM drive 12 reads various data pieces from a CD-ROM disk DK and outputs the readout data pieces to a bus line 10 under the control of the system controller 5. The display unit 13 displays various display data pieces under the control of the system controller 5.

The system controller 5 includes an interface unit 6, a CPU 7, a ROM (Read Only Memory) 8, and a RAM (Random Access Memory) 9. The interface unit 6 establishes an interface with external devices. The CPU 7 controls the whole system controller 5. The ROM 8 stores control programs used for controlling the system controller 5. The RAM 9 includes a non-volatile memory, and stores various data segments. The system controller 5 is connected, via the bus line 10, to the input device 11, the CD-ROM drive 12 and the display unit 13.

The display unit 13 includes a graphic controller 14, a buffer memory 15, a display controller 16, and a display device 17. The graphic controller 14 controls the entire operation of the display unit 13 on the basis of control data supplied from the CPU 7 via the bus line 10. The buffer memory 15 is formed with, for example, a VRAM (Video RAM), and temporarily stores image information which can be soon displayed. The display device 17 is formed with, for example, a LCD (Liquid Crystal Display) or a CRT (Cathode Ray Tube). The display controller 16 controls the display device 17 on the basis of the image data output from the graphic controller 14.

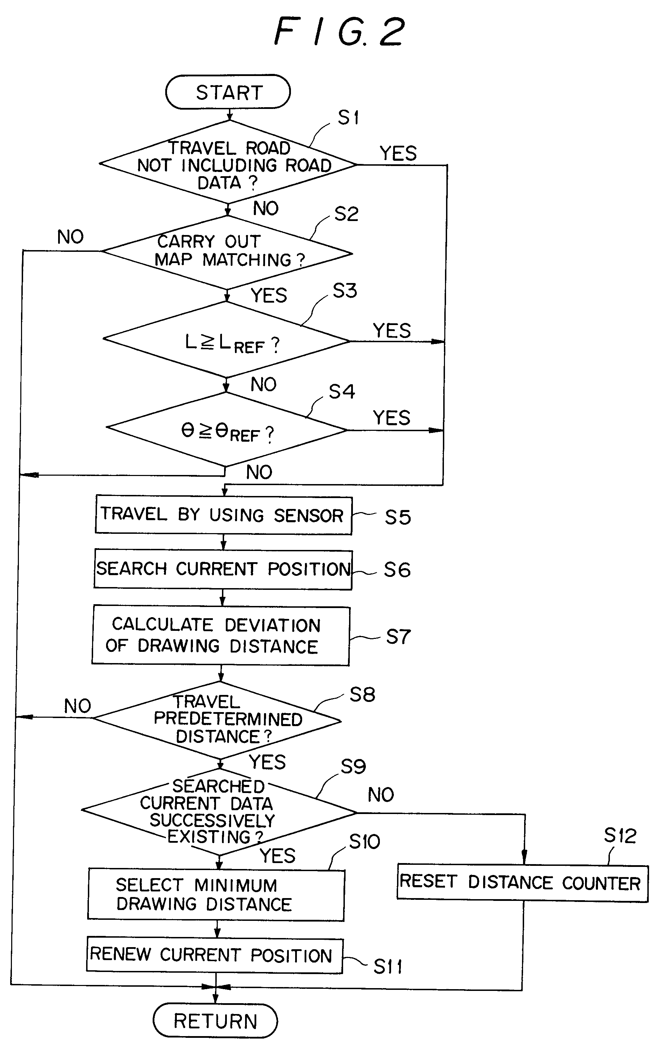

Subsequently, the operation of the present embodiment will be explained with reference to FIGS. 2 to 4.

FIG. 2 is a flowchart showing the schematic operation of the present embodiment. In this case, in the initial status, map matching is carried out to display the current position.

For the first time, the system controller 5 detects whether or not the vehicle is traveling on the road which road data is not recorded in the recording medium (STEP S1).

Concretely, the detection is performed by judging in the STEP S1 whether or not a flag indicating that the vehicle is traveling on the road which road data is not recorded in the recording medium is elected.

Accordingly, if the vehicle is traveling on the road which road data is not recorded in the recording medium, the processing in STEP S5 is executed.

On the other hand, if the vehicle is traveling on the road which road data is recorded in the recording medium, the system controller 5 detects whether the current position is displayed or not by carrying out the map matching in the STEP S1 (STEP S2).

If the current position is displayed without carrying out the map matching, the processing in the STEP S1 is executed. However, in this case, it is detected whether or not the drawing distance L, which is the distance between the measured position and the road data RD, is greater than or equal to a predetermined value, since in the initial status the current position is displayed by using map matching data.

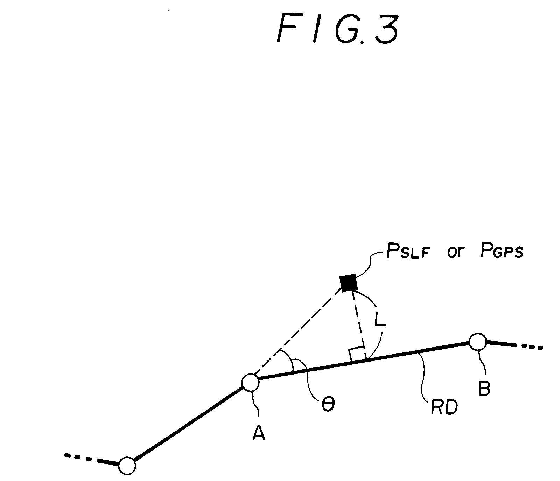

More concretely, as is shown in FIG. 3, by using the current position data P_{SLF} obtained on the basis of each data from the azimuth sensor 1, the angular speed sensor 2 and the travel distance sensor 3, or the current position data P_{GPS} obtained on the basis of the GPS measuring data supplied from the GPS receiver 4, the map matching is carried out to the road which is corresponding to the road data RD obtained from a CD-ROM disk DK via the CD-ROM drive 12. Subsequently, it is detected whether the drawing distance L is greater than or equal to the predetermined value L_{REF} or not. If the drawing distance L is greater than or equal to the predetermined value L_{REF} (L ≧ L_{REF}), it is detected that the vehicle is traveling on the road which road data is not recorded in the recording medium, and the process in STEP S5 is executed.

If the drawing distance L is less than the predetermined value L_{REF} (L < L_{REF}), the system controller 5 detects whether or not a drawing angle ϑ is greater than or equal to the predetermined value ϑ_{REF} (STEP S4). Wherein, the drawing angle ϑ is defined as an internal angle ϑ formed where the line segment AP_{SLF}(or P_{GPS}) and the line segment AB cross each other, as is shown in FIG. 3.

More concretely, as is shown in FIG. 3, by using the current position data P_{SLF} obtained on the basis of each data from the azimuth sensor 1, the angular speed sensor 2 and the travel distance sensor 3, or the current position data P_{GPS} obtained on the basis of the GPS measuring data supplied from the GPS receiver 4, the map matching is carried out to the road which is corresponding to the road data RD obtained from a CD-ROM disk DK via the CD-ROM drive 12. Subsequently, it is detected whether the drawing angle ϑ is greater than or equal to the predetermined value ϑ_{REF} or not.

If the drawing angle is less than the predetermined value ϑ_{REF} (ϑ < ϑ_{REF}), the process in STEP S1 is executed.

If the drawing angle ϑ is greater than or equal to the predetermined value ϑ_{REF}(ϑ ≧ ϑ_{REF}), the process in STEP S5 is executed. The system controller 5 displays the current position without carrying out the map matching by using the current position data P_{SLF} obtained on the basis of each data from the azimuth sensor 1, the angular speed sensor 2 and the travel distance sensor 3, or the current position data P_{GPS} obtained on the basis of the GPS measuring data supplied from the GPS receiver 4 (STEP S5).

At the same time, the system controller 5 carries out the map matching, and the current position candidacy data searched by map matching on one or a plurality of road including road data are stored in the RAM 9 (STEP S6).

Subsequently, the system controller 5 calculates the deviation of the drawing distance between the searched current position candidacy corresponding to each the searched current position candidacy data stored in the RAM 9 and the current position corresponding to the current position data STEP S7).

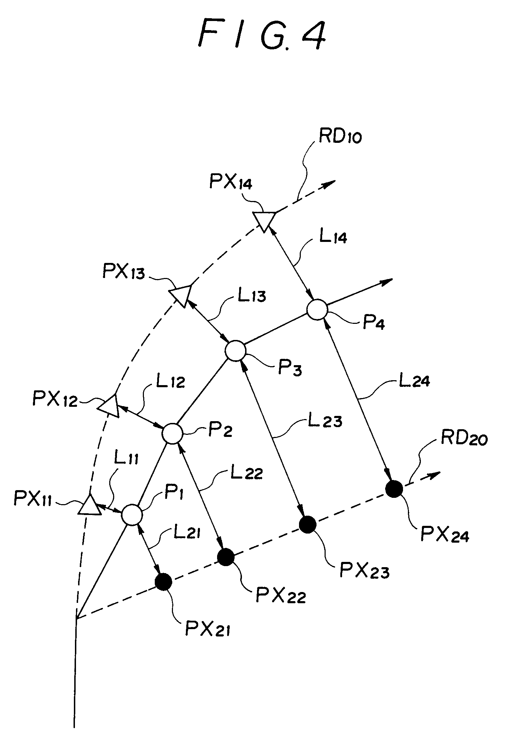

More concretely, as is shown in FIG. 4, the current positions which are displayed without carrying out the map matching are indicated as the mark ○, and there are two group of the searched current position candidacy series (In the drawing, each is indicated as the mark Δ and the mark ●).

In the case of FIG. 4, the drawing distance L₁₁, L₁₂, L₁₃, L₁₄ and the drawing distance L₂₁, L₂₂, L₂₃, L₂₄ are calculated, and the deviations of the drawing distances of road data RD₁₀ and RD₂₀ are calculated (STEP S7). Wherein, the drawing distances L₁₁, L₁₂, L₁₃ and L₁₄ are respectively the distances between the self-positions P₁, P₂, P₃ and P₄ displayed without map matching, and the searched current position candidacy data PX₁₁, PX₁₂, PX₁₃ and PX₁₄, road data items RD₁₀ of which are respectively corresponding to the self-positions P₁, P₂, P₃ and P₄. The drawing distance L₂₁, L₂₂, L₂₃ and L₂₄ are respectively the distances between self-positions P₁, P₂, P₃ and P₄ displayed without map matching, and searched current position candidacy data PX₂₁, PX₂₂, PX₂₃ and PX₂₄, road data items RD₂₀ of which are respectively corresponding to the self-positions P₁, P₂, P₃ and P₄.

Subsequently, the system controller 5 detects whether the vehicle has traveled a predetermined distance or not (STEP S8), after displaying the current position without carrying out the map matching on the basis of the outputted data from the self-sustaining sensors 1, 2, 3 or the GPS receiver 4.

If it is detected that the predetermined distance has not been traveled, the process in STEP S1 is executed.

If it is detected that the predetermined distance has been traveled, the system controller 5 detects whether or not a group of current position candidacy data successively exist in the predetermined distance the vehicle has traveled (STEP S9). Concretely, the system controller 5 detects whether or not the drawing distances (for example, L₁₁, L₁₂, L₁₃, L₁₄) relating to the searched current position candidacy data for example, PX₁₁, PX₁₂, PX₁₃, PX₁₄, are within a predetermined distance. In the detection of STEP S9, if the current position candidacy data do not successively exist in the predetermined distance, the system controller 5 resets a distance counter (STEP S12). Subsequently, the current position is displayed without carrying out the map matching and the process of STEP S1 is executed.

On the other hand, if the current position candidacy data successively exist in the predetermined distance, i.e. if it is detected that the current position is more accurately displayed by carrying out the map matching, the system controller 5 selects, as selected current position candidacy data, which have the minimum value of the deviations of the drawing distances among the searched current position candidacy data.

Concretely, for example in the case of FIG. 4, since the deviations of the drawing distances L₁₁, L₁₂, L₁₃, L₁₄ relating to the searched current position candidacy data PX₁₁, PX₁₂, PX₁₃, PX₁₄ are less than those of the drawing distances L₂₁, L₂₂, L₂₃, L₂₄ relating to the searched current position candidacy data PX₂₁, PX₂₂, PX₂₃, PX₂₄, the system controller 5 selects the items PX₁₁, PX₁₂, PX₁₃, PX₁₄ as selected current position candidacy data.

Subsequently, the system controller 5 renews the current position on the selected current position candidacy data, and the renewed current position is displayed. Therefore, the current position is displayed on the display screen by carrying out the map matching instead of the process for displaying the current position without carrying out the map matching on the basis of the outputted data from self-sustaining sensors 1, 2, 3 or the GPS receiver 4.

As described above, according to the present embodiment, if the vehicle is traveling on the road, the road data of which is not included in the navigation system, the current position can be more accurately displayed without displaying an erroneous current position by carrying out the map matching.

According to the present invention, if it is detected that the vehicle equipped with the navigation system is traveling on the road, which road data is included in the navigation system, the current position is displayed by carrying out the map matching. If the vehicle equipped with the navigation system is traveling on the road, which road data is not included in the navigation system, the current position is displayed by calculating the current position obtained from the self-sustaining sensors or the GPS receiver without carrying out the map matching. Therefore, the current position can be more accurately displayed and the accuracy in displaying the current position can be enhanced.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A navigation system (100) comprising measuring means (1, 2, 3, 4) for measuring a current position and outputting first current position data; and storing means (12) for storing map data, characterized in that the navigation system further comprises:
map matching means (7) for carrying out map matching on the basis of the first current position and the map data, and outputting second current position;
displaying means (13) having a screen for displaying various information;
current position displaying means (7, 13) for displaying the current position on a map displayed on the screen of the displaying means on the basis of the second current position data, in which the map is produced from the map data,
detecting means (7) for detecting whether or not the current position is actually existing on a road corresponding to road data included in the map data; and
switching means (7, 13) for displaying current positions obtained from the first current position data instead of those obtained from the second current position data at least during a predetermined interval, if the detecting means detects that the current position is actually not existing on the road.

2. A navigation system as claimed in claim 1, characterized in that
the navigation system further comprises drawing distance, which is a distance between the current position and the road data, detecting means (7) for detecting whether or not a drawing distance is greater than or equal to a predetermined distance, and in that if the drawing distance detecting means detects that the drawing distance is greater than or equal to the predetermined distance, the detecting means detects the current position is actually not existing on the road.

3. A navigation system as claimed in claim 2, characterized in that
the navigation system further comprises:
drawing angle detecting means (7) for detecting whether or not a drawing angle is greater than or equal to a predetermined value, if the drawing distance is less than the predetermined distance, and in that if the drawing angle detecting means detects that the drawing angle is greater than or equal to the predetermined value, the detecting means detects the current position is actually not existing on the road.

4. A navigation system as claimed in claim 3, characterized in that
the navigation system further comprises:
deviation calculating means (7) for calculating deviations of the drawing distances of the current position; and
selecting means (7) for detecting a minimum value of the deviations and selecting the current position which deviation is minimum.
